# NEUE EUROPÄISCHE PATENTSCHRIFT

(11) **EP 1 296 087 B2**
(45) Veröffentlichungstag und Bekanntmachung des Hinweises auf die Entscheidung über den Einspruch: **27.07.2011**
(45) Hinweis auf die Patenterteilung: 16.02.2005
(21) Anmeldenummer: 02021019.1
(22) Anmeldetag: 20.09.2002
(51) Int. Cl.: F16K 1/44

(54) **Ventil mit mehrteiliger Ventildichtung**
Valve with multi-part seal
Vanne avec joint à plusieurs parties

(30) Priorität: 20.09.2001 DE 10147455
(43) Veröffentlichungstag der Anmeldung: 26.03.2003
(73) Patentinhaber: Kieselmann GmbH, 75438 Knittlingen (DE)
(72) Erfinder: Weimer, Dieter, 75015 Bretten (DE); Blechner, Thomas, 76137 Karlsruhe (DE)
(74) Vertreter: Twelmeier, Ulrich

(56) Entgegenhaltungen:
- WO-A1-92/21900
- DE-A1- 2 440 698
- DE-A1- 2 460 182
- DE-U- 29 818 551
- DE-U1- 8 813 258
- DE-U1- 20 019 779
- GB-A- 1 067 564
- US-A- 2 911 184
- US-A- 5 472 216

## Beschreibung

Die Erfindung geht von einem Ventil mit den Merkmalen des Oberbegriffs des Anspruchs 1 aus.

Ein derartiges Ventil mit einer mehrteiligen, in einer Ringnut gehaltenen Ventildichtung ist aus der DE-U 298 18 551 bekannt. Obwohl das dort beschriebene Ventil gegenüber dem damaligen Stand der Technik eine wesentliche Verbesserung darstellt, hat sich gezeigt, dass das seit langem bestehende Problem eines Eindringens von Flüssigkeit zwischen Dichtring und Seitenwand der Ringnut für besonders hohe Anforderungen in der Lebensmittelindustrie, Getränkeindustrie und pharmazeutischen Industrie an Reinheit und Keimfreiheit noch immer nicht optimal gelöst ist.

Aufgabe der Erfindung ist es daher, ein Ventil zur Verfügung zu stellen, welches den hohen Anforderungen an Zuverlässigkeit, Reinheit und Keimfreiheit in der Lebensmittel-, Getränke- und pharmazeutischen Industrie noch besser gerecht wird.

Diese Aufgabe wird durch ein Ventil mit den Merkmalen des Anspruchs 1 gelöst. Vorteilhafte Weiterbildungen der Erfindung sind Gegenstand der Unteransprüche.

Erfindungsgemäß wird der Dichtring in der Ringnut bereits dort, wo er die Seitenwand der Ringnut, von der Öffnung der Ringnut aus gesehen, in der Offenstellung des Ventils erstmals berührt, und in einem daran anschließenden Bereich, von dem Stützring unterstützt.

Bei einem erfindungsgemäßen Ventil stabilisiert und fixiert auf diese Art und Weise der Stützring den Dichtring in seiner Position in der Ringnut, insbesondere in dem kritischen Bereich, wo der Dichtring die Seitenwand der Ringnut erstmals berührt. Zuverlässig wird so ein Hinterwandem des Dichtrings mit das Ventil durchströmender Flüssigkeit verhindert. Insbesondere kann selbst eine beim Betätigen des Ventils aufgrund von druck- und strömungsdynamischen Vorgängen auftretende Spitzenbelastung nicht zu einem Ablösen des Dichtrings von der Seitenwand der Ringnut führen. Die Bildung eines Spaltes zwischen Dichtring und der Seitenwand der Ringnut, in welchen Flüssigkeit eindringen und einen Hort für Bakterien bilden könnte, ist somit zuverlässig verhindert.

Bei einem erfindungsgemäßen Ventil ist das für eine Dichtwirkung zwischen dem Sitz und dem Schließkörper des Ventils erforderliche elastische oder elastomere Verhalten des Dichtrings von seinem statischen Einspannverhalten, wobei der Dichtring an die Seitenwände der Ringnut gepresst wird, entkoppelt. Ein erfindungsgemäßes Ventil erfüllt somit zwei an sich widersprüchliche Forderungen. Zum einen muss eine Dichtung zum Anpressen an den Sitz bzw. den Schließkörper des Ventils beim Schließvorgang eine Elastizität aufweisen, um das Ventil dicht zu schließen, andererseits soll die Dichtung möglichst fest in ihrer Ringnut sitzen, also in dieser Hinsicht ein möglichst starres Verhalten aufweisen. Durch die erfinderische Maßnahme bewirkt der Stützring einen sehr festen Sitz des Dichtrings in der Ringnut. Ein Abheben des Dichtrings von der Seitenwand der Ringnut wird durch den Stützring verhindert, so dass der Dichtring in dieser Hinsicht ein starres Verhalten aufweist. Die zum Schließen des Ventils nötige Elastizität wird durch einen zwischen den Schenkeln des Stützrings gelagerten und auf Verformung mit einer Rückstellkraft antwortenden Ring erreicht. Dieser Ring gibt nämlich bei Belastung federnd nach, so dass der Dichtring in der Schließstellung des Ventils zuverlässig zwischen Schließkörper und Sitz abdichtet.

Durch die erfindungsgemäße Maßnahme wird aufgrund der Fixierung des Dichtrings an den Seitenwänden der Ringnut insbesondere auch verhindert, dass beim Hineinfahren des Schließkörpers in den Sitz oder beim Herausfahren desselben der Dichtring einer Walkbewegung ausgesetzt wird. Hierdurch wird die beim Betätigen des Ventils auftretende Reibung und somit auch der Verschleiß drastisch vermindert. Vorteilhaft ist so die Standzeit eines erfindungsgemäßen Ventils erhöht.

Als weiterer Vorteil eines erfindungsgemäßen Ventils hat sich auch gezeigt, dass die zum Betätigen des Ventils erforderliche Kraft gegenüber bekannten Ventilen mit elastomeren O-Ringen als Dichtungen um bis zu 20 % verringert ist, da die beim Betätigen auftretenden Reibungskräfte entsprechend vermindert sind. Dies ermöglicht es, das Ventil mit einem kompakten und kostengünstigeren Antrieb zu versehen.

Eine vorteilhafte Weiterbildung der Erfindung sieht vor, dass der Dichtring in der Ringnut, von der Öffnung der Ringnut aus gesehen, genau ab dort, wo er in der Offenstellung des Ventils die Seitenwand der Ringnut erstmals berührt, von dem Stützring unterstützt wird. Diese Maßnahme hat den Vorteil, dass besonders zuverlässig ein Ablösen des Dichtringes von den Seitenwänden der Ringnut verhindert ist, einem Hinterwandern des Dichtringes von der im Ventil anstehenden Flüssigkeit begegnet wird und gleichzeitig eine radiale Verformbarkeit des Dichtringes und des auf Verformung mit einer Rückstellkraft antwortenden Ringes nicht oder allenfalls nur unwesentlich eingeschränkt ist.

Eine weitere vorteilhafte Weiterbildung der Erfindung sieht vor, dass der Stützring die Schenkel des Dichtringes gegen die Seitenwände der Ringnut drückt. Ein Anpressen der Schenkel des Dichtringes gegen die Seitenwände der Ringnut, was sich beispielsweise durch ein Übermaß der Schenkel oder eine entsprechende Bemaßung des Stützringes gewährleisten lässt, bewirkt, dass auch bei erhöhten Drücken ein Eindringen von Flüssigkeit zwischen dem Dichtring und den Seitenwänden der Ringnut ausgeschlossen ist, insbesondere dann, wenn durch das Einspannen der Schenkel des Dichtringes in diesen eine Taille gebildet wird.

Eine weitere vorteilhafte Weiterbildung der Erfindung sieht vor, dass der Schließkörper bzw. der Sitz einen ersten und einen zweiten Teil aufweisen, wobei die Fuge zwischen den beiden Teilen innerhalb der Ringnut verläuft. Diese Maßnahme hat den Vorteil, dass der Einbau des Dichtringes sowie des Stützringes und des auf Verformung mit einer Rückstellkraft antwortenden Ringes erleichtert ist. Der Einbau kann insbesondere ohne Spezialwerkzeuge vorgenommen werden und ein Anpressdruck des Stützringes auf den Dichtring gegen die Seitenwände der Ringnut lässt sich definiert beim Zusammenfügen der beiden Teile des Schließkörpers oder des Sitzes erzeugen, insbesondere und gezielt auch dort, wo der Dichtring die Seitenwände der Ringnut erstmals berührt, so dass bereits an vorderster Stelle einem Eindringen von Flüssigkeit zwischen den Seitenwänden der Ringnut und dem Dichtring entgegengewirkt wird.

Eine weitere vorteilhafte Weiterbildung der Erfindung sieht vor, dass die Ringnut hinterschnitten, insbesondere keilförmig hinterschnitten, ist. Diese Maßnahme hat den Vorteil, dass der Dichtring besonders fest in der Ringnut sitzt und so bei höheren Drücken des mit dem Ventil zu schaltenden Mediums eingesetzt werden kann. Vorteilhaft ist insbesondere nicht nur die Dichtwirkung zwischen dem Dichtring und den Seitenwänden der Ringnut erhöht, sondern auch ein Herausspülen der Dichtung durch etwaige beim Betätigen des Ventils auftretende druckund strömungsdynamische Lastspitzen zuverlässig verhindert.

Eine weitere vorteilhafte Weiterbildung der Erfindung sieht vor, dass die Schenkel des Stützringes in einem an den Dichtring anliegenden Bereich konvex gerundet ausgeführt sind. Diese Maßnahme hat den Vorteil, dass sich die Anpreßkraft des Stützringes auf den Dichtring stärker auf den kritischen, unmittelbar an die Öffnung anschließenden, Bereich konzentrieren lässt und sich somit die Dichtwirkung in diesem kritischen Bereich steigern läßt. Bevorzugt ist der Dichtring in dem vom Stützring unterstützten Bereich konkav ausgebildet. Vorteilhaft wird so eine besonders gute flächige Kraftübertragung vom Stützring auf den Dichtring und damit ein dichtes Anpressen an die Seitenwand der Ringnut gewährleistet. Insbesondere ist vorteilhaft, dass der Dichtring in dem vom Stützring unterstützten Bereich im Querschnitt gesehen eine Taille aufweist. Am besten ist die Taille unmittelbar an die Stelle anschließend angeordnet, an welcher bei geöffnetem Ventil der Dichtung erstmals die Seitenwand der Ringnut berührt. Vorteilhaft werden auf diese Art und Weise beim Einspannen der Dichtung in der Ringnut keilartig besonders hohe Kräfte auf den Dichtring übertragen und dieser damit besonders fest an die Seitenwand der Ringnut gepresst, und zwar umso fester, je größer der auf dem Dichtring lastende Druck ist. Ein weiterer Vorteil dieser Maßnahme ist, dass bei einer thermisch bedingten Ausdehnung des Dichtrings auf diese Art und Weise die Anpreßkraft erhöht und so ein Hinterwandem des Dichtrings insbesondere auch bei den im Betrieb auftretenden höheren Temperaturen von bis zu 140°C zuverlässig verhindert ist. Bei einem Abkühlen des Dichtrings auf Temperaturen unterhalb der Einbautemperatur ist vorteilhaft im Bereich der kritischen Engstelle eine temperaturbedingte Kontraktion des Materials des Dichtrings absolut gesehen am geringsten, so dass eine Vorspannung des Dichtrings an dieser Stelle im größtmöglichen Umfang erhalten bleibt. Dadurch, dass der Dichtring bevorzugt im Bereich der Taille an die Seitenwände der Ringnut gepreßt wird, ist auch ein Wandern des Dichtrings entlang der Seitenwand der Ringnut ausgeschlossen, da der Dichtring mit dem Stützring unter Einbeziehung der Seitenwände der Ringnut einen Formschluss eingeht. Die Taille bildet somit einen Fixpunkt der Anordnung und befindet sich bevorzugt an jener Stelle oder unmittelbar daran angrenzend, an welcher der Dichtring, von der Öffnung der Ringnut aus gesehen, erstmalig die Seitenwand der Ringnut berührt. Gerade an dieser kritischen Stelle wird durch die im Bereich der Taille bestehende Vorspannung, insbesondere bei einer keilförmig hinterschnittenen Ringnut, der Dichtring vom Stützring mit einer vorteilhaft hohen Kraft gegen die Seitenwand der Ringnut gepresst. Bevorzugt ist weiterhin, dass sich die Schenkel des Dichtrings zu ihrem freien Ende hin verdicken. Durch diese Maßnahme wird nicht nur die Wirkung der oben erwähnten Engstelle unterstützt, sondern auch im Falle einer thermisch bedingten Ausdehnung des Materials die Anpresskraft erhöht. Eine höhere Anpresskraft ist insbesondere bei höheren Temperaturen erwünscht, da das Materials des Dichtring bei höheren Temperaturen weicher wird, was grundsätzlich ein Hinterwandem der Dichtung begünstigt. Die erwähnte ausdehnungsbedingte stärkere Verpressung wirkt somit diesem Effekt entgegen.

Eine weitere vorteilhafte Weiterbildung der Erfindung sieht vor, dass sich die Schenkel des Stützringes zu ihrem freien Ende hin verjüngen. Diese Maßnahme erlaubt es, insbesondere bei einer keilförmig hinterschnittenen Ringnut, den zwischen den Schenkeln des Stützrings gelagerten, auf Verformung mit einer Rückstellkraft antwortenden, Ring in einem wohldefinierten Volumen vorzusehen. Der auf Verformung mit einer Rückstellkraft antwortende Ring befindet sich praktisch in einer von den Schenkeln des Stützrings und dem Dichtring begrenzten Kammer, welche vorteilhaft so bemessen ist, dass dem Ring zur Verfügung stehende Freiräume zu einer wohldefinierten Verformung beim Öffnen und Schließen des Ventils führen. Bevorzugt befindet sich der auf Verformung mit einer Rückstellkraft antwortende Ring unter Vorspannung in der erwähnten Kammer, so dass die beim Öffnen und Schließen des Ventils stattfindende Verformung noch besser definiert ist. Je besser nämlich die Verformung beim Öffnen und Schließen des Ventils definiert, nämlich in ihrem Ausmaß, in welchem sie auftritt, festgelegt ist, desto geringer sind Reibung und Verschleiß und desto geringer auch die Neigung des Dichtrings zu einer eine Hinterwanderung begünstigenden Walkbewegung. Idealerweise sind die dem auf Verformung mit einer Rückstellkraft antwortenden Ring zur Verfügung stehenden Freiräume gerade so groß ausgeführt, dass der Ring beim Schließen des Ventils genau den zur Verformung benötigten Platz hat und so die Kraft, mit welcher der Dichtring in der Schließstellung des Ventils gegen den Sitz bzw. in die Ringnut gepresst wird, genau und wiederholbar die gewünschte Stärke aufweist. Die Maßnahme, dass sich die Schenkel des Stützrings zu ihrem freien Ende hin verjüngen, bietet insbesondere bei einer keilförmig hinterschnittenen Ringnut aber auch den weiteren Vorteil, dass sich dem Stützring insgesamt eine in etwa keilförmige Form geben lässt, so dass durch die beim Einspannen der Dichtung auftretenden Querkräfte der Dichtring besonders fest gegen die Seitenwände der Ringnut gepresst wird.

Eine weitere vorteilhafte Weiterbildung der Erfindung sieht vor, dass sich der Stützring unmittelbar auf dem Grund der Ringnut abstützt. Diese Maßnahme hat den Vorteil, dass der Stützring den Dichtring mit einer größeren Kraft gegen die Seitenwände der Ringnut pressen kann und insbesondere der Dichtring einfacher mit einer definierten Vorspannung eingebaut werden kann.

Eine weitere vorteilhafte Weiterbildung der Erfindung sieht vor, dass am Grund der Ringnut zwischen dem Stützring und dem jeweiligen Schenkel des Dichtringes ein Freiraum vorgesehen ist. Bei einer temperaturbedingten Ausdehnung des Dichtrings kann sich Material des Dichtrings in diese Freiräume hinein ausdehnen. Vorteilhaft dienen diese Freiräume auch dazu, beim Einbau des Dichtrings verpresstes Material aufzunehmen. Vorteilhaft werden so schädliche Materialspannungen vermieden. Als Material für den Dichtring sind wegen ihrer chemischen Beständigkeit und Verschleißfestigkeit Polytetrafluorethylene (PTFE), insbesondere gefüllte PTFEs, wie sie beispielsweise in der EP 0 268 233 beschrieben sind, bevorzugt. Als Füllstoffe sind insbesondere Glaspartikel und mineralische Füllstoffe geeignet.

Eine weitere vorteilhafte Weiterbildung der Erfindung sieht vor, dass sich der Dichtring über die Ringnut wölbt. Zwar sind grundsätzlich auch spitz zulaufende, dachartige Querschnittsprofile des Dichtringes denkbar, jedoch gewährleistet ein sich über der Ringnut wölbender Dichtring eine vorteilhafte höhere Verschleißfestigkeit.

Eine weitere vorteilhafte Weiterbildung der Erfindung sieht vor, dass der auf Verformung mit einer Rückstellkraft antwortende Ring aus einem elastischeren Material als der Dichtring besteht. Grundsätzlich läßt sich die gewünschte Rückstellkraft mittels eines metallischen Federelementes, beispielsweise eines als Wendelfeder ausgebildeten Ringes, erwirken. Wegen ihres gut definierten und stabilen elastischen Verhaltens sind metallische Stützfedem gut geeignet. Weichere Materialien, wie beispielsweise Elastomere, bieten demgegenüber den Vorteil, kostengünstig zu sein und die Herstellungskosten zu senken, haben aber den Nachteil, mit der Zeit an Elastizität zu verlieren. Metallische Federelemente sind zwar konstruktiv aufwändiger und teurer als elastomere Ringe, bieten aber den Vorteil einer wesentlich längeren Lebensdauer. Wird der auf Verformung mit einer Rückstellkraft antwortende Ring aus einem elastomeren Material ausgeführt, dann ist ein O-Ring besonders bevorzugt. Dadurch ist eine preiswerte Möglichkeit gegeben, den Dichtring gegen den Sitz bzw. den Schließkörper anzupressen, da O-Ringe in allen möglichen Größen und Stärken auf dem Markt erhältlich sind. Es ist also nicht eine spezielle Anfertigung nötig. Auch dies trägt dazu bei, die Kosten eines erfindungsgemäßen Ventils zu senken.

Eine weitere vorteilhafte Weiterbildung der Erfindung sieht vor, dass der Stützring aus mehreren Segmenten, insbesondere aus vier Segmenten, zusammengesetzt ist, deren ringförmige Anordnung den Dichtring stützt. Vorteilhaft erleichtert eine solche mehrteilige Ausführung den Einbau des Stützringes erheblich, insbesondere ist ein solcher Einbau lose möglich, also ohne, dass die verschiedenen Segmente durch zusätzliche Maßnahmen verbunden werden. Bevorzugt haben die Stoßflächen zwischen benachbarten Segmenten eine von der radialen Orientierung abweichende Orientierung. Vorteilhaft werden so Einbau und Zusammenfügen des Stützringes in die Ringnut weiter erleichtert, da insbesondere ein Verkanten der Stoßflächen benachbarter Segmente erschwert ist. Der Stützring ist bevorzugt aus Metall ausgeführt, was den Vorteil bietet, den Dichtring besonders wirkungsvoll und mit hohen Kräften abzustützen.

Weitere Einzelheiten und Vorteile der Erfindung werden anhand eines Ausführungsbeispieles unter Bezugnahme auf die beigefügten Figuren erläutert. Es zeigen:
- Figur 1: ein Ausführungsbeispiel eines erfindungsgemäßen Ventiles in Form eines Doppelsitz-Leckageventils mit Ausschnittsvergrößerungen im Bereich der mehrteiligen Dichtungen,
- Figur 2: den in Figur 1 gezeigten Ausschnitt A eines Querschnittes des Ausführungsbeispieles im Bereich einer mehrteiligen Dichtung,
- Figur 3: eine mehrteilige Ventildichtung im Querschnitt, und
- Figur 4: eine mehrteilige Ventildichtung im Längsschnitt entlang der Schnittebene C-C der Figur 3.

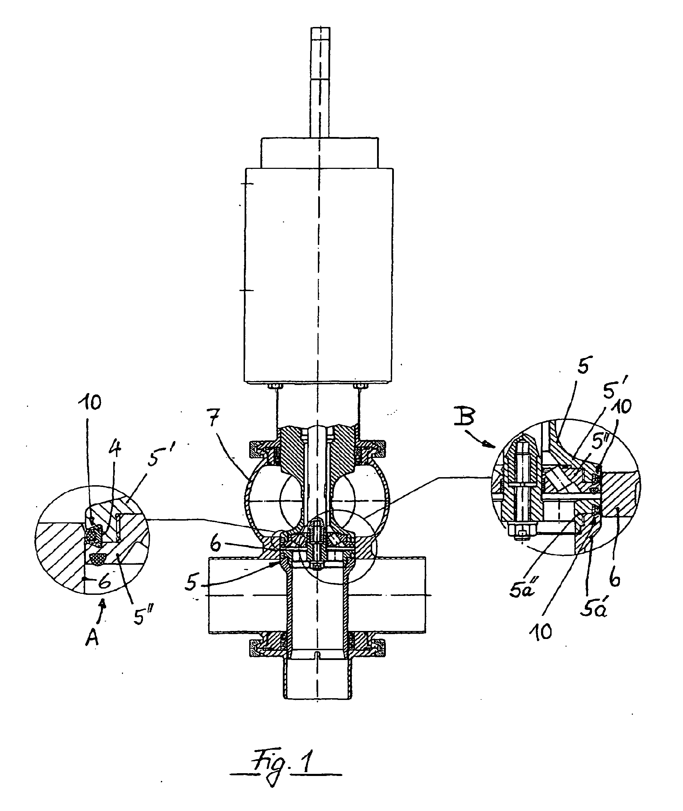

Das in Figur 1 im Querschnitt gezeigte Ausführungsbeispiel in Form eines Doppelsitz-Leckageventils weist ein Gehäuse 7 mit einem Sitz 6 auf und verfügt über einen Schließkörper 5, der im Gehäuse 7 zwischen einer Schließstellung und einer Offenstellung verschiebbar angeordnet ist. Der Schließkörper 5 ist, wie bei-Doppelsitzleckageventilen bekannt, aus zwei Schließgliedern gebildet, welche relativ zueinander bewegt werden können. Beide Schließglieder sind aus zwei Teilen 5', 5" bzw. 5a', 5a" zusammengesetzt. Zum Schließen des Ventils arbeitet der Schließkörper 5, wie in dem Ausschnitt B gezeigt, mit dem Sitz 6 zusammen. Ein in dieser Stellung zwischen dem Schließkörper 5 und dem Sitz 6 verbleibender Spalt wird von zwei mehrteiligen Dichtungen 10 abgedichtet. Bei einem anders aufgebauten Ventil kann grundsätzlich selbstverständlich eine einzige mehrteilige Dichtung 10 ausreichend sein.

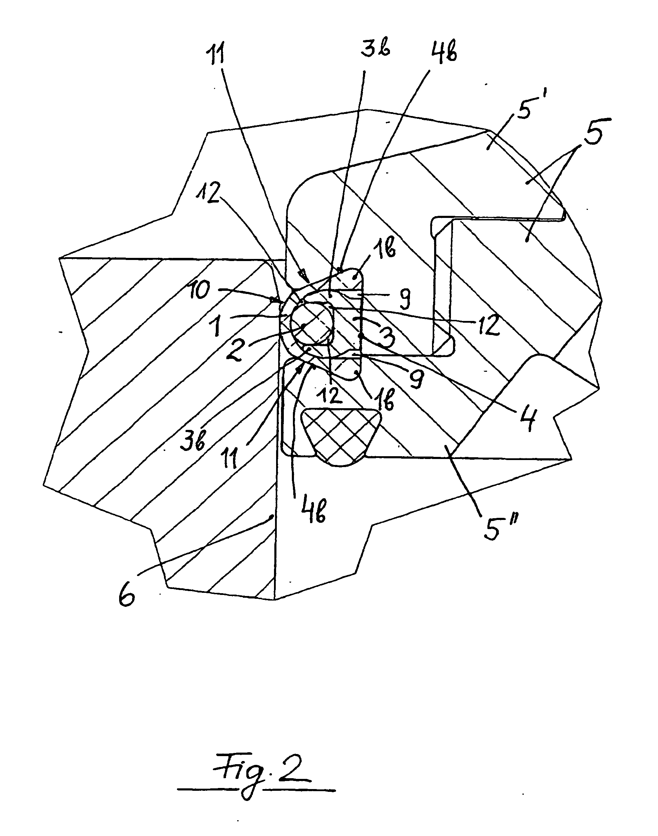

Wie der Ausschnitt A der Figur 1 und Figur 2 zeigen, verfügen diese mehrteiligen Dichtungen 10 über einen in einer Ringnut 4 angeordneten Dichtring 1, welcher einen zur Ringnut 4 hin geöffneten U- oder C-förmigen Querschnitt mit zwei Schenkeln 1 b aufweist. Ein Stützring 3, der einen zum Dichtring 1 hin geöffneten U- oder C-förmigen Querschnitt mit zwei Schenkeln 3b aufweist, unterstützt den Dichtring 1 im Bereich der Seitenwände 4b der Ringnut 4, und zwar auch bereits dort, wo der Dichtring 1 die Seitenwand 4b der Ringnut 4, von der Öffnung der Ringnut 4 aus gesehen, in der Offenstellung des Ventils erstmals berührt. Zwischen dem Stützring 3 und dem Dichtring 1 ist ein auf Verformung mit einer Rückstellkraft antwortender Ring 2 angeordnet, welcher im gezeigten Ausführungsbeispiel als elastomerer O-Ring ausgeführt ist, grundsätzlich aber auch als elastisches Element ausführbar ist.

Vorteilhaft ist bei dem gezeigten Ventil der Bereich, welcher beim Schließen des Ventils durch Anpressen an den Sitz 6 dynamisch verformt wird, von der Einspannstelle, also jenem Bereich, in welchem der Stützring 3 den Dichtring 1 unterstützt entkoppelt. Hierdurch wird zuverlässig ein Hinterwandem des Dichtrings 1 mit das Ventil durchströmender Flüssigkeit verhindert und gleichzeitig das für ein dichtes Schließen erforderliche elastische oder elastomere Verhalten gewahrt.

Figur 2 zeigt den Ausschnitt A der Figur 1 zur besseren Übersichtlichkeit in einer Vergrößerung, Wie man erkennt, ist die Ringnut 4 keilförmig hinterschnitten ausgeführt. Der bevorzugt aus Stahl ausgeführte, sich am Grund der Ringnut 4 abstützende Stützring 3 presst die Schenkel 1b des Dichtringes 1 insbesondere im vorderen, der Öffnung der Ringnut 4 zugewandten Bereich an die Seitenwände 4b der Ringnut 4. Wie man in Figur 2 auch sieht, sind die Schenkel 3b des Stützrings 3 dort, wo sie den Dichtring 1 besonders unterstützen, konvex gerundet ausgeführt und verjüngen sich zu ihren freien Enden hin. Vorteilhaft wirkt der Stützring durch diese Art und Weise gewissermaßen wie ein Keil auf den Dichtring 1 ein und bewirkt eine besonders hohe Anpresskraft der Schenkel 1b des Dichtrings 1 an die Seitenwände 4b der Ringnut 4.

Der Dichtring 1 weist in jenem Bereich, in welchem er vom Stützring 3 unterstützt wird, im Querschnitt eine Taille 11 mit einer Engstelle auf. Die Taille 11 kann im Dichtring 1 vorgeformt sein; es ist aber auch möglich, sie erst durch einen vom Stützring ausgehenden Anpressdruck zu bilden, wenn der Dichtring 1 mit seinen beiden Schenkeln 1 b zwischen den Schenkeln 3b des Stützringes 3 und den Seitenwänden 4b der Nut 4 eingespannt wird und durch den dabei auftretenden Druck die Taille 11 geformt wird. Der eingebaute Dichtring 1 steht in der Nut 4 jedenfalls unter Vorspannung. Im Bereich dieser Engstelle ist jedenfalls der eingebaute Dichtring 1 auf seiner Innenseite konkav gerundet, so dass eine hervorragende Kraftübertragung vom Stützring 3 auf den Dichtring 1 gewährleistet ist und der Stützring 3 mit dem Dichtring 1 einen Formschluss eingeht, welcher ein Wandern des Dichtrings 1 entlang einer der Seitenwände 4b der Ringnut 4 verhindert. Insbesondere ist sowohl bei einer durch steigende Temperaturen bedingten Ausdehnung des Materials des Dichtrings 1 als auch bei einer durch kältere Temperaturen verursachten Kontraktion eine Wanderung des Dichtrings entlang der Seitenwand 4b der Ringnut 4 in jenem Bereich, in welchem der Stützring 3 den Dichtring 1 an die Seitenwände 4b der Ringnut 4 presst, durch die Taille 11 ausgeschlossen. Der Dichtring 1 wird aufgrund der Engstelle in der Taille 11 somit nicht nur kraftschlüssig durch Anpressen an die Seitenwände 4b der Ringnut 4 vom Stützring 3 in seiner Position gehalten, sondern auch formschlüssig in seiner Position fixiert. Ein weiterer Vorteil, dass der Dichtring 1 im Bereich einer Engstelle vom Stützring 3 unterstützt wird, liegt darin, dass thermisch bedingte Größenänderungen, welche naturgemäß zum betroffenen Volumen proportional sind, im Bereich der Engstelle am geringsten ausfallen, so dass auch bei einer Abkühlung des Dichtrings 1 die Anpresskraft allenfalls unwesentlich nachlässt.

Die Ausbildung der Taille 11 geht einher mit der Bildung zweier im Querschnitt keilförmiger Abschnitte des Dichtrings 1, deren dünnste Stelle eben die Engstelle der Taille 11 ist. Sollte von außen her Zug auf den Dichtring 1 ausgeübt werden, so widersetzt sich dem der tiefer in der Ringnut 4 liegende keilförmige Abschitt des Dichtrings 1. Wird von außen Druck auf den Dichtring 1 ausgeübt, z.B. durch das im Ventil am Schließkörper 5 anstehende Medium, dann wird der äußere keilförmige Abschnitt des Dichtrings 1 in den sich verengenden Keilspalt zwischen dem Stützring B und den Seitenwänden 4b der Ringnut 4 getrieben und erhöht dadurch die Dichtwirkung und erschwert ein Hinterwandem des Dichtrings 1. Zunehmender Druck im anstehenden Medium erhöht also die Dichtwirkung - ein höchst willkommener Vorteil der Erfindung vor allem beim Einsatz in der Lebensmittelindustrie, in der Getränkeindustrie und in der pharmazeutischen Industrie, wo es auf äußerste Reinheit und Keimfreiheit ankommt.

Der auf Verformung mit einer Rückstellkraft antwortende Ring 2 ist zwischen den Schenkeln 3b des Stützrings 3 angeordnet. Diese Schenkel 3b bilden zusammen mit dem Dichtring 1 gewissermaßen eine Kammer, wodurch der dynamisch beanspruchte Bereich der mehrteiligen Dichtung 10 von der Einspannstelle des Dichtrings 1 entkoppelt ist. Bevorzugt wird der Ring 2 unter Vorspannung eingebaut, so dass dieser wohldefinierten Verhältnissen unterworfen ist. Der Ring 2 ist in seiner Einbaulage von Freiräumen 12 umgeben, welche so bemessen sind, dass dem Ring 2 gerade das notwendige Volumen zur Verfügung steht, um bei einer durch Schließen des Ventils bedingten Verformung das gewünschte elastische Verhalten zu zeigen. Durch die knapp bemessenen Freiräume 12 und die Vorspannung des Rings 2 sind die Bewegungen des Rings 2 beim Schließen des Ventils auf das notwendige Maß begrenzt. Vorteilhaft werden so nicht nur auftretende Reibungseffekte vermindert oder verhindert, sondern auch eine Walkbewegung des Dichtrings 1 verhindert. Nicht nur wird so ein Hinterwandem des Dichtrings 1 durch das Ventil durchströmende Flüssigkeit auch bei hohen Drücken verhindert, sondern auch der Verschleiß und die zum Betätigen des Ventils benötigte Kraft reduziert.

Die Schenkel 1b des Dichtringes 1 verdicken sich zu ihrem freien Ende hin. An dem Nutgrund der Ringnut 4 ist zwischen dem Stützring 3 und jedem der beiden Schenkel 1b des Dichtringes 1 ein Freiraum 9 vorgesehen, welcher Material des bevorzugt aus einem gefüllten PTFE gefertigten Dichtrings 1 im Falle einer thermischen Ausdehnung und beim Verpressen aufnimmt.

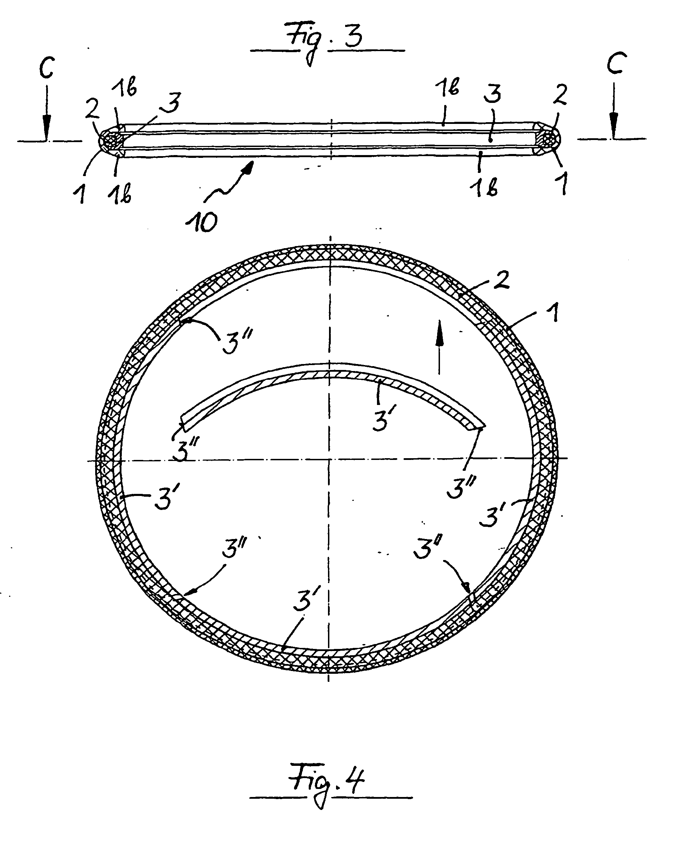

Figur 3 zeigt eine mehrteilige Ventildichtung 10 des in Figur 1 gezeigten Ventils im Querschnitt. Der Stützring 3 ist bevorzugt aus Stahl oder einem anderen Metall gefertigt, um möglichst hohe Kräfte auf den Dichtring 1 ausüben bzw. aufnehmen zu können. Um den Einbau des Stützringes 3 in die Ringnut 4 zu erleichtern ist der Stützring 3 vierteilig ausgeführt.

Figur 4 zeigt zur Verdeutlichung hierzu einen entlang der Schnittlinie C-C in Figur 3 ausgeführten Längsschnitt. Wie man in Figur 4 erkennt, setzt sich der Stützring 3 aus vier annähernd gleich großen Teilstücken 3' (Segmente) zusammen. Zum Einbau der mehrteiligen Dichtungen 10 werden die Schließglieder des Schließkörpers 5 in ihre Teile 5' und 5" sowie 5a' und 5a" zerlegt. Die Fugen zwischen diesen Teilen 5' und 5" sowie 5a' und 5a" verlaufen jeweils in einer der Ringnuten 4, so dass die Ringnuten 4 leicht zugänglich sind. Zum Einbau einer mehrteiligen Dichtung 10 wird diese zunächst aus dem Dichtring 1, dem auf Verformung mit einer Rückstellkraft antwortenden Ring 2 und den Segmenten 3' des Stützrings 3 zusammengesetzt. Dazu wird zunächst der Ring 2 zwischen den Schenkeln 1b des Dichtrings 1 platziert. Anschließend werden dann die Segmente 3' des Stützrings 3 zwischen die Schenkel 1b des Dichtrings 1 geschoben. Um das Zusammensetzen des Stützrings 3 aus den Segmenten 3' zu erleichtern, verfügen diese über Stoßflächen 3", welche eine von der radialen Orientierung abweichende Orientierung haben. Auf diese Art und Weise können die Segmente 3' lose ohne Schwierigkeit zusammengefügt und mit dem Ring 2 verbunden werden. Nach Einsetzen der zusammengesetzten mehrteiligen Dichtung 10 in der Ringnut 4, werden die Teile 5' und 5" sowie 5a' und 5a" des Schließkörpers 5, bevorzugt durch Verschrauben, zusammengefügt, wodurch der Dichtring 1 zwischen den Seitenwänden 4b der Ringnut 4 und dem Stützring 3 fixiert und verpresst wird. Bei diesem Vorgang nehmen der Ring 2, die Segmente 3' des Stützrings 3 und der Dichtring 1 in der Ringnut 4 wie auch relativ zueinander ihre endgültige Position ein.

## Patentansprüche

1. Ventil, insbesondere Doppelsitz-Leckageventil, für die Lebensmittel-, Getränke- und die pharmazeutische Industrie,
mit einem Gehäuse (7), das einen Sitz (6) aufweist,
mit einem Schließkörper (5), der im Gehäuse (7) zwischen einer Schließstellung und einer Offenstellung verschiebbar angeordnet ist und zum Schließen des Ventils mit dem Sitz (6) zusammenarbeitet,
und mit einem zwischen dem Schließkörper (5) und dem Sitz (6) wirkenden Dichtring (1), welcher in einer Ringnut (4) angeordnet ist, wobei
der Dichtring (1) einen zur Ringnut (4) hin offenen U-oder C-förmigen Querschnitt mit zwei Schenkeln (1b) aufweist und von einem Stützring (3), der einen zum Dichtring (1) hin geöffneten U- oder C-förmigen Querschnitt mit zwei Schenkeln (3b) aufweist, gestützt wird und wobei zwischen dem Stützring (3) und dem Dichtring (1) ein auf Verformung mit einer Rückstellkraft antwortender Ring (2) angeordnet ist,
**dadurch gekennzeichnet, dass** der Dichtring (1) in der Ringnut (4) bereits dort, wo er die Seitenwand (4b) der Ringnut (4), von der Öffnung der Ringnut (4) aus gesehen, in der Offenstellung des Ventils erstmals berührt, und in einen daran anschließenden Bereich von dem Stützring (3) unterstützt wird und in dem vom Stützring (3) unterstützten Bereich im Querschnitt gesehen eine Taille (11) aufweist.

2. Ventil nach Anspruch 1, **dadurch gekennzeichnet, dass** die Ringnut (4) im Schließkörper (5) angeordnet ist.

3. Ventil nach Anspruch 1, **dadurch gekennzeichnet, dass** die Ringnut (4) im Sitz (6) angeordnet ist.

4. Ventil nach Anspruch 1, 2 oder 3, **dadurch gekennzeichnet, dass** der Dichtring (1) in der Ringnut (4), von der Öffnung der Ringnut (4) aus gesehen, genau ab dort, wo er die Seitenwand (4b) der Ringnut (4) in der Offenstellung des Ventils erstmals berührt, von dem Stützring (3) unterstützt wird.

5. Ventil nach einem der vorstehenden Ansprüche, **dadurch gekennzeichnet, dass** der Stützring (3) die Schenkel (1b) des Dichtringes (1) gegen die Seitenwände (4b) der Ringnut (4) drückt.

6. Ventil nach einem der vorstehenden Ansprüche, **dadurch gekennzeichnet, dass** der Schließkörper (5) bzw. der Sitz (6) einen ersten und einen zweiten Teil (5', 5" sowie 5a' und 5a") aufweist, wobei die Fuge zwischen den beiden Teilen (5', 5" sowie 5a' und 5a") innerhalb der Ringnut (4) verläuft.

7. Ventil nach einem der vorstehenden Ansprüche, **dadurch gekennzeichnet, dass** die Ringnut (4) hinterschnitten, insbesondere keilförmig hinterschnitten, ist.

8. Ventil nach einem der vorstehenden Ansprüche, **dadurch gekennzeichnet, dass** die Schenkel (3b) des Stützringes (3) in einem an dem Dichtring (1) anliegenden Bereich konvex gerundet ausgeführt sind.

9. Ventil nach Anspruch 8, **dadurch gekennzeichnet, dass** der Dichtring (1) in dem vom Stützring (3) unterstützten Bereich konkav ausgebildet ist.

10. Ventil nach einem der vorstehenden Ansprüche, **dadurch gekennzeichnet, dass** sich die Taille (11) unmittelbar an oder neben jener Stelle befindet, an welcher der Dichtring (1) die Seitenwand (46) der Ringnut (4) in der Offenstellung des Ventils erstmals berührt.

11. Ventil nach einem der vorstehenden Ansprüche, **dadurch gekennzeichnet, dass** sich die Schenkel (1b) des Dichtringes (1) zu ihrem freien Ende hin verdicken.

12. Ventil nach einem der vorstehenden Ansprüche, **dadurch gekennzeichnet, dass** sich die Schenkel (3b) des Stützringes (3) zu ihren freien Enden hin verjüngen.

13. Ventil nach einem der vorstehenden Ansprüche, **dadurch gekennzeichnet, dass** am Grund der Ringnut (4) zwischen dem Stützring (3) und den Schenkeln (1b) des Dichtringes (1) ein Freiraum (9) vorgesehen ist.

14. Ventil nach einem der vorstehenden Ansprüche, **dadurch gekennzeichnet, dass** sich der Stützring (3) unmittelbar auf dem Grund der Ringnut (4) abstützt.

15. Ventil nach einem der vorstehenden Ansprüche, **dadurch gekennzeichnet, dass** der Dichtring (1) aus einem PTFE, insbesondere aus einem gefüllten PTFE gefertigt ist.

16. Ventil nach einem der vorstehenden Ansprüche, **dadurch gekennzeichnet, dass** sich der Dichtring (1) über die Ringnut (4) vorwölbt.

17. Ventil nach einem der vorstehenden Ansprüche, **dadurch gekennzeichnet, dass** der auf Verformung mit einer Rückstellkraft antwortende Ring (2) aus einem elastischeren Material als der Dichtring (1) besteht.

18. Ventil nach einem der vorstehenden Ansprüche, **dadurch gekennzeichnet, dass** der auf Verformung mit einer Rückstellkraft antwortende Ring (2) aus einem elastomeren Material ist.

19. Ventil nach einem der vorstehenden Ansprüche, **dadurch gekennzeichnet, dass** der auf Verformung mit einer Rückstellkraft antwortende Ring (2) ein O-Ring ist.

20. Ventil nach einem der Ansprüche 1 bis 16, **dadurch gekennzeichnet, dass** der auf Verformung mit einer Rückstellkraft antwortende Ring (2) als metallisches Federelement, insbesondere als Wendelfeder, ausgeführt ist.

21. Ventil nach einem der vorstehenden Ansprüche, **dadurch gekennzeichnet, dass** der Stützring (3) aus mehreren Segmenten (3'), insbesondere aus vier Segmenten (3') zusammengesetzt ist.

22. Ventil nach Anspruch 20, **dadurch gekennzeichnet, dass** die Stoßflächen (3") zwischen benachbarten Segmenten (3') eine von der radialen Orientierung abweichende Orientierung haben.

23. Ventil nach einem der vorstehenden Ansprüche, **dadurch gekennzeichnet, dass** der Stützring (3) aus Metall ist.

## Claims

1. Valve, especially a double-seated leakage valve, for the foodstuff, beverage and pharmaceutical industries,
having a housing (7) comprising a seat (6),
having a closing body (5), which is arranged in the housing (7) for movement between a closed position and an open position and which coacts with the seat (6) for closing the valve,
and having an annular gasket (1) acting between the closing body (5) and the seat (6) and being arranged in an annular groove (4),
the gasket (1) having a U- or C-shaped cross-section with two legs (1b), which opens toward the annular groove (4), and being supported by a supporting ring (3), having a U- or C-shaped cross-section with two legs (3b), which opens toward the gasket (1), and a ring (2), which responds to deformation with a restoring force, being arranged between the supporting ring (3) and the gasket (1);
**characterized in that** the gasket (1) is supported in the annular groove (4) by the supporting ring (3) from the very point where it first gets into contact with the side wall (4b) of the annular groove (4) in the open position of the valve, viewed from the opening of the annular groove (4), and also in a region adjacent thereto,
and that the cross-section of the gasket (1) comprises a neck (11) in the region supported by the supporting ring (3).

2. The valve as defined in Claim 1, **characterized in that** the annular groove (4) is arranged in the closing body (5).

3. The valve as defined in Claim 1, **characterized in that** the annular groove (4) is arranged in the seat (6).

4. The valve as defined in Claim 1, 2 or 3, **characterized in that** the gasket (1) is supported in the annular groove (4) by the supporting ring (3) exactly from the point where it first gets into contact with the side wall (4b) of the annular groove (4) in the open position of the valve, when viewed from the opening of the annular groove (4).

5. The valve as defined in any of the preceding claims, **characterized in that** the supporting ring (3) acts to urge the legs (1 b) of the gasket (1) against the side walls (4b) of the annular groove (4).

6. The valve as defined in any of the preceding claims, **characterized in that** the closing body (5) or the seat (6), respectively, comprises a first and a second part (5', 5", and 5a' and 5a") with the joint between the two parts (5', 5", and 5a' and 5a") extending within the annular groove (4).

7. The valve as defined in any of the preceding claims, **characterized in that** the annular groove (4) is provided with an undercut, especially with a wedge-type undercut.

8. The valve as defined in any of the preceding claims, **characterized in that** the legs (3b) of the supporting ring (3) have a convex rounded shape in an area adjoining the gasket (1).

9. The valve as defined in Claim 8, **characterized in that** the gasket (1) has a concave shape in the area supported by the supporting ring (3).

10. The valve as defined in any of the preceding claims, **characterized in that** the neck (11) is located directly at or adjacent the location where the gasket (1) first gets into contact with the side wall (4b) of the annular groove (4) in the open position of the valve.

11. The valve as defined in any of the preceding claims, **characterized in that** the legs (1 b) of the gasket (1) get thicker toward their ends.

12. The valve as defined in any of the preceding claims, **characterized in that** the legs (3b) of the supporting ring (3) taper toward their free ends.

13. The valve as defined in any of the preceding claims, **characterized in that** a free space (9) is provided at the base of the annular groove (4) between the supporting ring (3) and the legs (1 b) of the gasket (1).

14. The valve as defined in any of the preceding claims, **characterized in that** the supporting ring (3) is directly supported on the base of the annular groove (4).

15. The valve as defined in any of the preceding claims, **characterized in that** the gasket (1) is made from a PTFE, especially a filled PTFE.

16. The valve as defined in any of the preceding claims, **characterized in that** the gasket (1) bulges beyond the annular groove (4).

17. The valve as defined in any of the preceding claims, **characterized in that** the ring (2), which responds to deformation with a restoring force, consists of a material more elastic than the gasket (1).

18. The valve as defined in any of the preceding claims, **characterized in that** the ring (2), which responds to deformation with a restoring force, consists of an elastomeric material.

19. The valve as defined in any of the preceding claims, **characterized in that** the ring (2), which responds to deformation with a restoring force, is an O ring.

20. The valve as defined in any of Claims 1 to 16, **characterized in that** the ring (2), which responds to deformation with a restoring force, is configured as a metal spring element, especially as a spiral spring.

21. The valve as defined in any of the preceding claims, **characterized in that** the supporting ring (3) is composed of a plurality of segments (3'), especially of four segments (3').

22. The valve as defined in Claim 20, **characterized in that** the abutting surfaces (3") between neighboring segments (3') have an orientation different from radial orientation.

23. The valve as defined in any of the preceding claims, **characterized in that** the supporting ring (3) consists of metal.

## Revendications

1. Soupape, en particulier soupape antifuite du type à double siège, pour l'industrie alimentaire, l'industrie des boissons et l'industrie pharmaceutique, comprenant un logement (7) qui présente und siège (6), un corps de fermeture (5) qui est disposé en mobilité dans le logement (7) entre une position de fermeture et une position d'ouverture et qui coopère avec le siège (6) pour la fermeture de la soupape, et un anneau d'étanchéité (1) agissant entre le corps de fermeture (5) et le siège (6), qui est disposé dans une rainure annulaire (4), l'anneau d'étanchéité (1) présentant une section transversale en forme de U ou de C ouvert en direction de la rainure annulaire (4), comportant deux branches (1 b), et étant supporté par un anneau de support (3), qui présente une section transversale en forme de U ou de C ouvert en direction de l'anneau d'étanchéité (1), comportant deux branches (3b), un anneau (2), répondant à une déformation avec une force de rappel, étant disposé entre l'anneau de support (3) et l'anneau d'étanchéité (1),
**caractérisée en ce que** l'anneau d'étanchéité (1), dans la rainure annulaire (4), déjà à l'endroit où, dans la position d'ouverture de la soupape, il entre en contact pour la première fois avec la paroi latérale (4b) de la rainure annulaire (4), lorsqu'on regarde à partir de l'ouverture de la rainure annulaire (4), et dans une zone directement adjacente audit endroit, est supporté par l'anneau de support (3),
et **en ce que** l'anneau d'étanchéité (1) présente, dans la zone dans laquelle il est soutenu par l'anneau de support (3), vu en section transversale, un col (11).

2. Soupape selon la revendication 1, **caractérisée en ce que** la rainure annulaire (4) est disposée dans le corps de fermeture (5).

3. Soupape selon la revendication 1, **caractérisée en ce que** la rainure annulaire (4) est disposée dans le siège (6).

4. Soupape selon la revendication 1, 2 ou 3, **caractérisée en ce que** l'anneau d'étanchéité est supporté par l'anneau de support (3) dans la rainure annulaire (4), lorsqu'on regarde à partir de l'ouverture de la rainure annulaire (4), précisément à partir de l'endroit où, dans la position d'ouverture de la soupape, il entre en contact pour la première fois avec la paroi latérale (4b) de la rainure annulaire (4).

5. Soupape selon l'une quelconque des revendications précédentes, **caractérisée en ce que** l'anneau de support (3) comprime les branches (1b) de l'anneau d'étanchéité (1) contre les parois latérales (4b) de la rainure annulaire (4).

6. Soupape selon l'une quelconque des revendications précédentes, **caractérisée en ce que** le corps de fermeture (5), respectivement le siège (6) présente une première partie et une deuxième partie (5', 5", ainsi que 5a' et 5a"), le joint entre les deux parties (5', 5", ainsi que 5a' et 5a") s'étendant à l'intérieur de la rainure annulaire (4).

7. Soupape selon l'une quelconque des revendications précédentes, **caractérisée en ce que** la rainure annulaire (4) est munie d'une contre-dépouille, en particulier d'une contre-dépouille cunéiforme.

8. Soupape selon l'une quelconque des revendications précédentes, **caractérisée en ce que** les branches (3b) de l'anneau de support (3) sont réalisées en une configuration convexe arrondie dans une zone adjacente à l'anneau d'étanchéité (1).

9. Soupape selon la revendication 8, **caractérisée en ce que** l'anneau d'étanchéité (1) est réalisé en une configuration concave dans la zone dans laquelle il est soutenu par l'anneau de support (3).

10. Soupape selon l'une quelconque des revendications précédentes, **caractérisée en ce** le col (11) est disposé directement à l'endroit ou à côté de l'endroit auquel l'anneau d'étanchéité (1) entre pour la première fois en contact avec la paroi latérale (46) de la rainure annulaire (4) dans la position d'ouverture de la soupape.

11. Soupape selon l'une quelconque des revendications précédentes, **caractérisée en ce que** les branches (1 b) de l'anneau d'étanchéité (1) s'épaississent en direction de leur extrémité libre.

12. Soupape selon l'une quelconque des revendications précédentes, **caractérisée en ce que** les branches (3b) de l'anneau de support (3) se rétrécissent en direction de leur extrémité libre.

13. Soupape selon l'une quelconque des revendications précédentes, **caractérisée en ce que**, à la base de la rainure annulaire (4), on prévoit un espace libre entre l'anneau de support (3) et les branches (1 b) de l'anneau d'étanchéité (1).

14. Soupape selon l'une quelconque des revendications précédentes, **caractérisée en ce que** l'anneau de support (3) s'appuie directement sur la base de la rainure annulaire (4).

15. Soupape selon l'une quelconque des revendications précédentes, **caractérisée en ce que** l'anneau d'étanchéité (1) est fabriqué à partir d'un PTFE, en particulier à partir d'un PTFE contenant une matière de charge.

16. Soupape selon l'une quelconque des revendications précédentes, **caractérisée en ce que** l'anneau d'étanchéité (1) forme une convexité orientée vers l'avant par-dessus la rainure annulaire (4).

17. Soupape selon l'une quelconque des revendications précédentes, **caractérisée en ce que** l'anneau (2) répondant à une déformation avec une force de rappel est constitué d'une matière plus élastique que celle de l'anneau d'étanchéité (1).

18. Soupape selon l'une quelconque des revendications précédentes, **caractérisée en ce que** l'anneau (2) répondant à une déformation avec une force de rappel est une matière élastomère.

19. Soupape selon l'une quelconque des revendications précédentes, **caractérisée en ce que** l'anneau (2) répondant à une déformation avec une force de rappel est un joint torique.

20. Soupape selon l'une quelconque des revendications 1 à 16, **caractérisée en ce que** l'anneau (2) répondant à une déformation avec une force de rappel est réalisé sous la forme d'un élément de ressort métallique, en particulier sous la forme d'un resort hélicoidal.

21. Soupape selon l'une quelconque des revendications précédentes, **caractérisée en ce que** l'anneau de support (3) est composé de plusieurs segments (3'), en particulier de quatre segments (3').

22. Soupape selon la revendication 20, **caractérisée en ce que** les surfaces de contact (3") entre des segments voisins (3') possèdent une orientation qui s'écarte de l'orientation radiale.

23. Soupape selon l'une quelconque des revendications précédentes, **caractérisée en ce que** l'anneau de support (3) est en métal.
